# EUROPEAN PATENT APPLICATION

(11) **EP 1 686 837 A1**
(43) Date of publication of application: **02.08.2006**
(21) Application number: 05001853.0
(22) Date of filing: 28.01.2005
(51) Int. Cl.: H05B 41/04, H05B 41/292

(54) **Ignition circuit and ballast for a high intensity discharge lamp**

(71) Applicant: TTE Germany GmbH, 78048 Villingen-Schwenningen (DE)
(72) Inventor: Lopez, Daniel, 78052 VS-Obereschach (DE); Vogel, Stefan, 78086 Brigachtal (DE); Laeufer, Martin, 78052 VS-Obereschach (DE)
(74) Representative: Arnold, Klaus-Peter

(57) **Abstract**

The ignition circuit (ZG) for a discharge lamp (L) comprises a transformer (TR) with a primary winding (W1) and a secondary winding (W2) coupled with a first terminal (1) to a first DC voltage supply (DC1) and a with a second terminal (2) to the lamp (L), and a switch (M2) coupled in series with the primary winding (W1). The primary winding (W1) is coupled with a first terminal (3) to a second DC voltage supply (DC2) and with a second terminal (4) to the switch (M2). The ignition circuit is in particular a part of a ballast unit comprising a first DC voltage supply (DC1) and a micro-controller (MC) for the operation of a HID lamp (L).

## Description

### FIELD OF THE INVENTION

The present invention relates to an ignition circuit for starting a lamp, in particular a high intensity discharge (HID) lamp, and a respective ballast unit. Lamps of this kind, for example mercury, sodium or xenon lamps, require a high ignition voltage for producing an electric arc, which generates a plasma inside the lamp.

### BACKGROUND

Several solutions are known for the ignition of a gas lamp, for example from US 5,594,308. In this reference an ignition circuit comprising a step-up transformer is used. The step-up transformer contains two windings which are connected in series and which are coupled between the terminals of a power supply and a terminal of the lamp. Between the two winding a tab is arranged which is coupled to a switch and to a multiplier circuit. When the switching device becomes conductive, a discharge path is provided for the multiplier circuit and a high voltage pulse is induced in the secondary winding for the ignition of the discharge lamp.

In the reference EP-A-1133215 an ignition circuit for switching-on a high pressure lamp is described, which uses a pulse transformer for the ignition as well as for switching off the lamp. The pulse transformer comprises a primary and a secondary winding, the secondary winding being coupled between a supply voltage and a terminal of the lamp. The primary winding is coupled to the input terminal of the secondary winding with a first terminal and with a second terminal via a switch to ground. A pulse capacitor is connected in parallel with the series connection established by the switch and the primary winding, for providing ignition voltage pulses in the secondary winding, when the switch is closed. By means of the oscillations between the capacitor and the primary winding a multitude of ignition pulses is generated during a single half cycle of the mains frequency.

### SUMMARY OF THE INVENTION

It is the object of the present invention to provide an efficient ignition circuit for a discharge lamp, which provides well-defined ignition pulses for the lamp, and a ballast unit comprising a respective ignition circuit.

This object is achieved for an ignition circuit as described in claim 1 and for a ballast unit as described in claim 6. Preferred embodiments are described in the dependent claims.

The ignition circuit according to the invention comprises a transformer with a primary winding and a secondary winding and a switch coupled in series with the primary winding. The secondary winding is coupled with a first terminal to a first DC voltage supply and with a second terminal to the lamp, and the primary winding is coupled with a first terminal to a second DC voltage supply and with a second terminal to the switch.

The winding ratio of the windings of the secondary to the primary winding is in a preferred embodiment in the range of 2 to 8, the voltage of the first DC voltage supply in the range of 150 to 400 Volts and the voltage of the second DC voltage supply in the range of 6 to 40 Volts. With this arrangement, defined ignition pulses of 2 - 3 kV can be generated for example for the ignition of a mercury HID lamp.

The ignition circuit is in a further aspect of the invention a part of a ballast circuit comprising a step-down converter as the first DC voltage supply and a micro-controller, the micro-controller controlling the down converter for operating the lamp with a defined power and actuating the switch for the ignition of the lamp. The micro-controller may use in particular a variation of the turn-on time of the switch to provide a pulse amplitude variation for performing a soft ignition of the lamp.

### SHORT DESCRIPTION OF THE DRAWINGS

Preferred embodiments of the invention are explained now in more detail below with regard to schematic drawings showing:

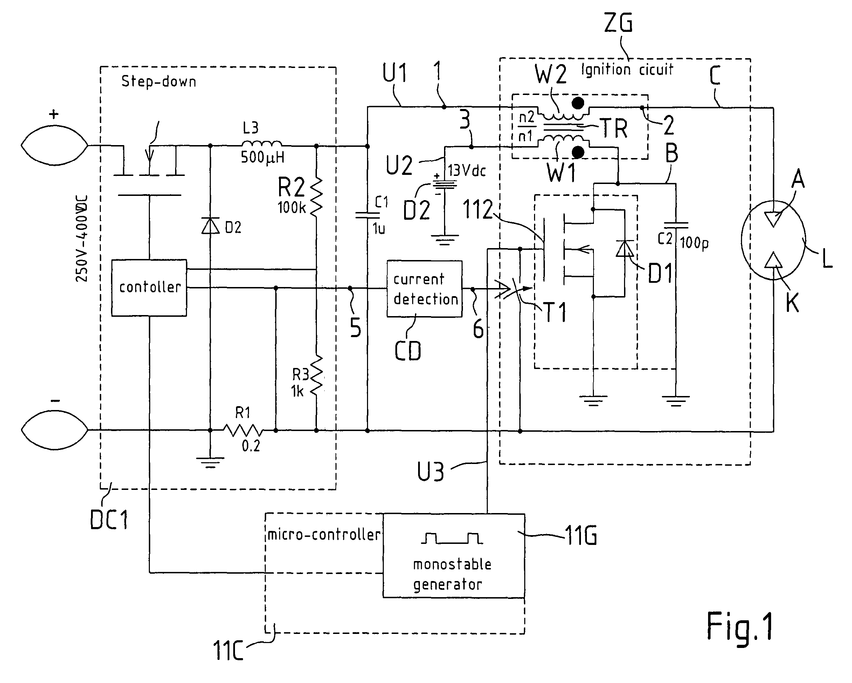

- Fig. 1: a ballast unit with an ignition circuit for the operation of a HID lamp, and
- Fig. 2: voltage and current diagrams showing the operation of the ignition circuit of Fig. 1.

### PREFERRED EMBODIMENTS OF THE INVENTION

In the figure a circuit arrangement is shown comprising a DC voltage supply DC2 for providing a first supply voltage U1 for the operation of a gas lamp L. The gas lamp L is for example a high intensity discharge (HID) mercury lamp. The circuit arrangement comprises further an ignition circuit ZG coupled between the DC voltage supply DC2 and the lamp L for providing ignition pulses for the lamp L.

The DC voltage supply DC2 is in a preferred embodiment a step-down converter comprising a MOSFET M1 operating as a switch, a coil L3, a free-wheeling diode D2 and a controller circuit IC1, as known from prior art. The DC voltage supply DC1 comprises further a first feedback circuit FB1 with resistors R2 and R3 for providing a voltage feedback and a second feedback circuit FB2 comprising a resistor R1 for providing a current feedback for the controller circuit IC1. The controller circuit IC1 is for example an integrated circuit UC3843.

The ignition circuit ZG for the discharge lamp L comprises a transformer TR with a primary winding W1 and a secondary winding W2 and a switch M2, which is coupled in series with the primary winding W1. The secondary winding W2 is coupled with a first terminal 1 to the positive supply of the DC voltage supply DC1 and with a second terminal 2 to an anode A of the lamp L. The primary winding W1 is coupled with a first terminal 3 to a DC voltage supply DC2 and with a second terminal 4 to the switch M2. With this arrangement, ignition voltage pulses are generated, which are added to the voltage U1 in the sense of a superposition.

By switching through the switch M2 a defined time, a sawtooth current flows from the DC voltage supply DC2 via the primary winding W1 to ground because of the inductivity of winding W1. This current may be limited in addition by the selection of the RDS-On resistance in case a MOSFET is used as the switch M2 and/or an additional resistor in series with the switch M2.

When the switch M2 is switched off, the energy stored via the primary winding W1 in the transformer TR generates an oscillation between the inductivity of the primary winding W1 and stray capacitances of the MOSFET M2 and the transformer TR. A capacitor C2 with a low capacity value coupled in parallel to the switch M2 may be used for shaping the ignition pulses, but this capacitor C2 was not necessary for the present embodiment. The ignition pulses generated by the switch M2 have for example amplitudes of 600 to 900 Volts, the amplitude being dependent in particular on the switching-on time of the switch M2. The voltage across winding W1 is then transformed according to the winding ratio n2/n1 to winding W2, which voltage is added to the voltage U1.

In a preferred embodiment the switch M2 is a MOSFET, which is coupled with its drain terminal to the primary winding W1 and with its source terminal to ground, and the output voltage of the DC voltage supply DC2 is in the range of 6 to 40 Volts, for example 13 V for the operation of a HID mercury lamp. The MOSFET is in particular a high voltage MOSFET with a maximum drain-source voltage in the range of 600 to 900 Volts. With a winding ratio n2/n1 of 3 or 4 of the windings N2 to N1, ignition pulses of about 2,5 kV can be generated for the ignition of the lamp L.

The switching pulses for the switch M2, control voltage U3, are provided in this embodiment by a mono-stable pulse generator MG coupled to a control electrode of the switch M2, for switching through M2. The mono-stable generator MG is included for example in a micro-controller MC, which controls further the controller circuit IC1. In case a MOSFET is used as the Switch M2, a drive stage (not shown) may be used in addition being coupled between the generator MG and the control electrode of the MOSFET to provide a respective switching current. The DC voltage supply DC1, the ignition circuit ZG and the microcontroller MC are in particular a part of a ballast unit, which operates the lamp L with a defined power.

The duration of the ignition pulses and therefore the amplitude and the pulse frequency are determined by the software of the micro-controller MC. By varying the turn-on time of the switch M2 from smaller to larger turn-on time values, a sequence of rising pulse amplitudes can be generated, for performing a soft ignition of the lamp. The variation of the turn-on time can be included easily in the software of the micro-controller MC.

As long as the lamp has not ignited by the ignition pulses, the pulse energy of the transformer TR is sent back to the DC voltage supply DC2 via the internal diode D1 of the MOSFET, in case a MOSFET is used, which reduces the power supplied by the DC voltage supply DC2. By keeping the pulse-width of the switching pulses of the MOSFET M2 below one microsecond, no high peak currents in the secondary winding are required and the pulse energy stored in the transformer TR is low. The MOSFET can be operated without a heat sink. This energy is so small that even by generating higher voltage pulses up to the region of the break-down voltage of the MOSFET, the MOSFET will limit the pulse amplitudes by a voltage break-down and absorb the energy without any damage.

When the lamp L ignites, its impedance drops suddenly and a DC current from the DC voltage supply DC1 is flowing through the lamp L. The current is for example in the range of 0,5 Amperes, which saturates the core of the transformer TR. The inductance of the transformer TR drops then from some Milli-Henry to some Micro-Henry. By using an appropriate wire for the secondary winding W2, the losses of the transformer TR can be kept below 1,5 Watts at a lamp current of 4 Amperes during normal operation of the lamp L.

For improving the safety of the ballast unit, a current detection circuit CD is included, which is coupled with an input terminal 5 to the feedback circuit FB2. The current detection circuit CD operates via an output terminal 6 a transistor switch T1, which is coupled between the control electrode of the switch M2 and ground.

When the detection circuit CD senses a current slightly below the saturation level of the primary winding W1, the control voltage U3 is pulled down immediately by the detection circuit CD via the switch T1. This is a case after a first ignition of the lamp L. The lamp L is then in a low impedance state and the capacitor C1 discharges quickly. During this time period, the ignition circuit is therefore disabled.

Therefore, by using a transformer TR, the losses in the ballast unit can be kept low and the temperature stress of the circuit is low. The ignition pulses are in particular less sensitive to layout or other parameters because of the sine shape of the ignition pulses. The ballast unit is may be used for HID lamps requiring ignition pulses below 3 kV, but can be used also for operating other gas discharge lamps.

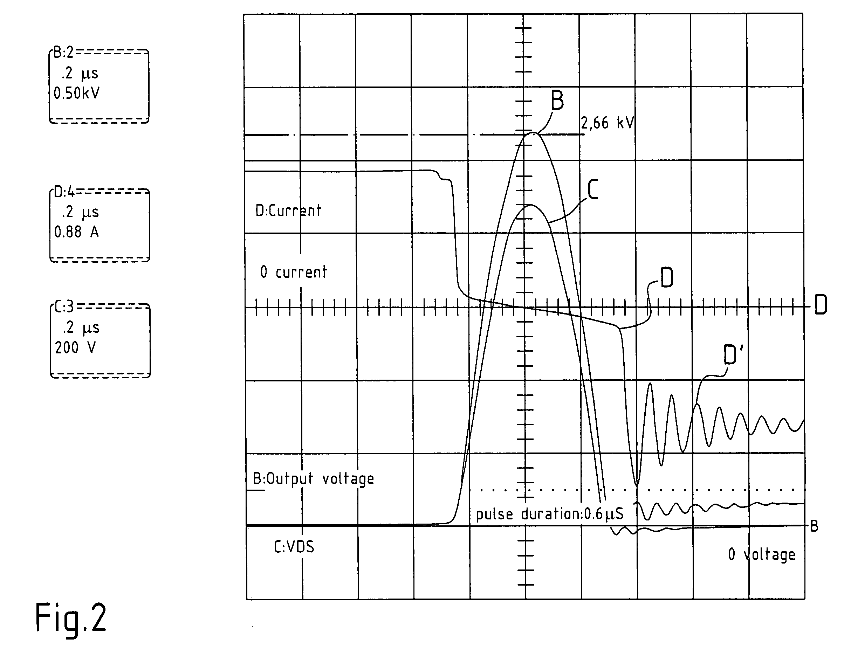

In figure 2 voltage and current diagrams are displayed showing the operation of the ignition circuit. The time scale of the diagrams is 0,2 us per unit. The voltage C is the drain source voltage across the MOSFET M2, which has maximum peak amplitude of about 880 Volts. The voltage B is the output voltage of the transformer TR having a peak output ignition voltage of 2,66 kV. The lamp is still in a high impedance state without any ignition. No capacitor C2 has been used in this embodiment.

The pulse duration of the ignition pulse B is very short, only 0,6 microseconds, and has a well defined sine half wave. Because of the very short pulse duration, the losses and therefore the heat dissipation of the ignition circuit is very low. The micro-controller MC is programmed for providing one ignition pulse every 100 microseconds over a time period of 6 seconds.

The diagram D shows the current through the MOSFET M2. As shown, before the ignition pulse B the MOSFET M2 is conducting, providing a current therefore through the primary winding W1. When the MOSFET M2 is closed by applying a positive control voltage U3 to the gate of the MOSFET M2, the MOSFET M2 is switched off, causing to develop the flyback voltage C. The ignition pulse B depends primarily on the winding ratio n2/n1. After the ignition pulse B has decreased, a small current D' is flowing in the reverse direction via diode D1 back to the DC voltage supply DC2.

The ballast unit as described may be used in particular for operating a mercury HID lamp being arranged within a DLP rear projection television set, but can be used also for other applications.

## Claims

1. Ignition circuit (ZG) for a discharge lamp (L) comprising
a transformer (TR) with a primary winding (W1) and a secondary winding (W2) coupled with a first terminal (1) to a first DC voltage supply (DC1) and a with a second terminal (2) to the lamp (L), and
a switch (M2) coupled in series with the primary winding (W1), **characterized in that**
the primary winding (W1) is coupled with a first terminal (3) to a second DC voltage supply (DC2) and with a second terminal (4) to the switch (M2).

2. Ignition circuit in accordance with claim 1, wherein the winding ratio (n2/n1) of the secondary winding (W2) to the primary winding (W1) is in the range of 2 to 8.

3. Ignition circuit in accordance with claim 1 or 2, wherein the output voltage (U1) of the first DC voltage supply (DC1) is in the range of 150 to 400 Volts, and the output voltage (U2) of the second DC voltage supply (DC2) in the range of 6 to 40 Volts.

4. Ignition circuit in accordance with claim 1, 2 or 3 wherein the switch (M2) is a MOSFET, which is controlled by a micro-controller (MC).

5. Ignition circuit in accordance with one of the preceding claims, **characterized in that** the ignition circuit is usable for operating a high intensity discharge mercury lamp.

6. Ignition circuit in accordance with one of the preceding claims, wherein the transformer (TR) comprises an inductivity in the range of 0,5-10 milli-Henry for proving ignition pulses with a length of less than 5 microseconds.

7. Ballast unit, comprising a first DC voltage supply (DC1), in particular a step down converter (DC1), a micro-controller (MC) for controlling the step down converter and an ignition circuit in accordance with one of the preceding claims 1 - 6.

8. Ballast unit in accordance with claim 7, comprising further a current detection circuit (CD) for disabling the ignition circuit (ZG) during a discharge phase of an output capacitor (C1) of the first DC voltage supply (DC1).

9. Ballast unit in accordance with claim 8, wherein the current detection circuit (CD) is coupled with an input (5) to a current feedback circuit (FB2) of the first DC voltage supply (DC1).
